# NEUE EUROPÄISCHE PATENTSCHRIFT

(11) **EP 3 135 960 B2**
(45) Veröffentlichungstag und Bekanntmachung des Hinweises auf die Entscheidung über den Einspruch: **20.09.2023**
(45) Hinweis auf die Patenterteilung: 06.05.2020
(21) Anmeldenummer: 16183526.9
(22) Anmeldetag: 10.08.2016
(51) Int. Cl.: F16H 63/50, B60K 23/08, B60W 30/19, B62M 25/06

(54) **SCHALTEINRICHTUNG ZUR BETÄTIGUNG EINES SCHALTGETRIEBES EINES MOTORRADS ZUR DURCHFÜHRUNG EINES GANGWECHSELS BEI GESCHLOSSENER KUPPLUNG**
SHIFTING DEVICE FOR ACTUATING A GEARBOX OF A MOTORCYCLE FOR CARRYING OUT A SHIFT OF GEARS IN CLOSED COUPLING
DISPOSITIF DE COMMUTATION DESTINE A ACTIONNER UN DISPOSITIF DE CHANGEMENT DE VITESSE D'UNE MOTO POUR UN CHANGEMENT DE RAPPORT EN CAS D'EMBRAYAGE FERME

(30) Priorität: 28.08.2015 DE 102015114338
(43) Veröffentlichungstag der Anmeldung: 01.03.2017
(73) Patentinhaber: KTM AG, 5230 Mattighofen (AT)
(72) Erfinder: SEIMANN, Johannes, 4820 Bad Ischl (AT)
(74) Vertreter: Söllner, Udo

(56) Entgegenhaltungen:
- WO-A1-2015/114109
- DE-A1-102012 209 963
- US-A1- 2008 099 268
- US-A1- 2008 115 984

## Beschreibung

Die vorliegende Erfindung betrifft ein Motorrad mit einer Schalteinrichtung, welche das Schaltgetriebe des einen Antriebsmotor aufweisenden Motorrads zur Durchführung eines Gangwechsels bei geschlossener Kupplung zwischen Antriebsmotor und Schaltgetriebe betätigt, wobei das Schaltgetriebe eine drehbetätigbare Schaltwelle und eine drehbetätigbare Schaltwalze aufweist, wobei die Schalteinrichtung einen zur Drehbetätigung der Schaltwelle vorgesehenen Schalthebel aufweist und zur Beeinflussung des Abtriebsmoments des Antriebsmotors ausgebildet ist, wobei die Schalteinrichtung eine die Drehbetätigung der Schaltwelle erfassende erste Sensoreinrichtung aufweist.

Bei einem Motorradgetriebe läuft der Gangwechsel üblicherweise derart ab, dass der Fahrer des Motorrads die Momentenübertragung zwischen dem Antriebsmotor und dem Schaltgetriebe durch das Öffnen der Kupplung unterbricht und dann den Schalthebel, der mit der Schaltwelle gekoppelt ist, mit seinem Fuß zum Heraufschalten oder Herunterschalten betätigt und der Fahrer die Kupplung dann wieder schließt, indem er den gezogenen Kupplungshandgriff wieder loslässt.

Obwohl diese Vorgehensweise nach wie vor üblich ist, sind auch schon Schalteinrichtungen bekannt geworden, welche ein Schalten des Schaltgetriebes bei geschlossener Kupplung ermöglichen, wobei solche Schalteinrichtungen üblicherweise als Schaltassistenten bezeichnet werden. Diese Schaltassistenten besitzen den Vorteil, dass die Zeitdauer, während der das vom Antriebsmotor bereitgestellte Abtriebsmoment zur Beschleunigung des Motorrads unterbrochen ist, verringert werden kann, was insbesondere bei Sportmotorrädern oder Rennmotorrädern von Vorteil ist. Ein Schalten ohne die Notwendigkeit der Betätigung der Kupplung durch den Fahrer ist aber auch für das Tourenfahrern von Interesse, da dadurch die Kupplungshand des Fahrers insbesondere beim Fahren langer Strecken entlastet werden kann und dies zu einem entspannten und komfortablen Fahren beiträgt.

Anhand der DE 10 2012 209 963 A1 ist eine Motorradschaltung mit Schaltassistent zum Schalten ohne Kupplungsbetätigung bekannt geworden. Der anhand dieser Druckschrift bekannt gewordene Schaltassistent weist eine Federspeichereinheit auf, die durch die Betätigung des Schalthebels eine Vorspannungsveränderung erfährt und das Schalten in einen anderen Gang wird durch die in der Feder gespeicherte Energie eingeleitet und durchgeführt. Der Schaltassistent wird dabei konzentrisch auf die Schaltwelle des Getriebes aufgesetzt und ragt von diesem seitlich hervor.

Eine Bewegung des Schalthebels wird dabei auf den Schalterassistenten übertragen und führt zu einer Veränderung der Federvorspannung der Federspeichereinheit. Mit der in der Feder gespeicherten Energie wird dann der Gangwechselvorgang unterstützt, wobei zur Erkennung des Schaltwunsches des Fahrers ein Sensor am Gehäuse des Schaltassistenten vorgesehen ist, der die Lage des Schalthebels erfasst, der wiederum bei einer entsprechenden Betätigung durch den Fahrer der Erzeugung der erhöhten Federvorspannung der Federspeichereinheit des Schaltassistenten dient.

Anhand der DE 10 2010 015 037 A1 ist eine Schalteinrichtung für Motorräder bekannt geworden, die eine Schaltkraftübertragungseinrichtung aufweist, welche zwischen Schalthebel des Motorrads und Schaltwelle des Getriebes angeordnet ist und zwei Druckfedern aufweist, die bei einem durchzuführenden Schaltvorgang über eine entsprechende Betätigung des Schalthebels vorgespannt werden. Die beiden Druckfedern weisen dabei unterschiedliche Federkennlinien auf, was dazu führt, dass die Erfassung des bei der Betätigung des Schalthebels jeweils zurückgelegten Federwegs zu unterschiedlichen Federkräften führt.

Die jeweils erzeugte Federkraft wird von einer elektronischen Einrichtung überwacht und auf das Erreichen einer Schaltkraftschwelle hin ausgewertet, wobei nach dem Überschreiten der jeweiligen Schaltkraftschwelle das vom Antriebsmotor abgegebene Motormoment reduziert wird und ein Schaltvorgang durchgeführt wird. Ein Erreichen der Schaltkraftschwelle wird also als Gangwechselwunsch des Fahrers ausgewertet, woraufhin das Motormoment reduziert wird, um den eigentlichen Gangwechsel durchführen zu können.

Anhand der DE 10 2010 015 036 A1 ist eine zu der vorstehend beschriebenen Schalteinrichtung ganz ähnliche Schalteinrichtung bekannt geworden, die aber statt mit zwei Druckfedern nur mit einer in beide Schaltrichtungen belasteten Druckfeder arbeitet und bei der der Gangwechselwunsch des Fahrers dadurch festgestellt wird, dass die durch die Betätigung des Schalthebels erzeugte Vorspannkraft der Feder auf eine Schaltkraftschwelle hin überwacht wird, beziehungsweise der auf die Betätigung des Schalthebels hin von der Feder zurückgelegte Federweg über eine Sensoreinrichtung erfasst und in eine Schaltkraftschwelle umgerechnet wird, deren Überschreiten dann als Gangwechselwunsch des Fahrers interpretiert wird. Wird die Schaltkraftschwelle überschritten, wird zur Durchführung des eigentlichen Gangwechselvorgangs das Motormoment verringert.

Allen genannten Schalteinrichtungen ist gemeinsam, dass sie im Kraftübertragungsweg zwischen dem Schalthebel und dem Getriebeeingang eine Feder aufweisen, die durch eine entsprechende Betätigung des Schalthebels durch den Fahrer des Motorrads vorgespannt wird. Die so durch den Fahrer bei der Einleitung eines Gangwechselvorgangs erzeugte Federkraft wird dann nach dem Überschreiten eines entsprechenden Schwellenwerts als Signal für die kurzfristige Reduzierung des Motormoments ausgewertet oder aber als gespeicherte Energie für die Durchführung des eigentlichen Gangwechselvorgangs benutzt.

Im Kraftübertragungsweg zwischen dem Schalthebel und dem Getriebeeingang des Motorradgetriebe befindet sich daher in allen Fällen eine Federeinrichtung, die beim Betätigen des Schalthebels so betätigt wird, dass sie Federarbeit leistet, also der in der unbetätigten Stellung des Schalthebels vorliegende Federweg der Feder einer Änderung unterzogen wird. Das Vorhandensein der Federeinrichtung im Kraftübertragungsweg führt aber in allen Fällen zu einer Veränderung des vom Fahrer des Motorrads empfundenen Schaltverhaltens, verglichen mit einem Schaltvorgang, bei dem nicht zunächst eine Feder im Kraftübertragungsweg vorgespannt werden muss.

Die Feder führt zu einem durch den Fahrer des Motorrads als indifferent oder schwammig empfundenen Schaltverhalten, die Feder macht insbesondere die Leerlauffindung durch den Fahrer schwierig, also das Auffinden der Neutralstellung des Motorradgetriebes. Die genannten Schaltassistenten besitzen einen komplexen und damit kostenaufwendigen Aufbau und sind störungsanfällig, da jederzeit ein Federbruch auftreten kann, woraufhin dann die Funktion der Schaltassistenten nicht mehr gewährleistet ist und das damit ausgestattete Fahrzeug bis nach der Durchführung einer entsprechenden Reparatur nicht mehr weiterbenutzt werden kann. Darüber hinaus unterliegt eine Feder Ermüdungserscheinungen und Setzbeträgen, die das Schaltverhalten eines mit einer Feder versehenen Schaltassistenten über einen längeren Betriebszeitraum verändern, worauf sich der Fahrer wiederum einstellen muss. Es sind auch bereits Schaltassistenzsysteme bekannt geworden, die ohne Feder im Kraftübertragungsweg zwischen Schalthebel und Schaltwelle arbeiten. Diese Systeme machen Gebrauch von einer Messung der Kraft, mit der der Fahrer des Motorrads den Schalthebel betätigt (siehe die US 2008/115984 A1). Zur Auslösung des Gangwechselvorgangs durch Beeinflussung des Motormoments muss vom gemessenen Kraftwert ein eingestellter Schwellenwert überschritten werden. Wird dieser Schwellenwert hoch eingestellt, muss der Fahrer den Schalthebel mit hoher Kraft betätigen, damit er schalten kann, was auf den Fahrer ermüdend wirkt, wird der Schwellenwert niedrig eingestellt, führt schon ein kurzfristiges versehentliches Berühren des Schalthebels durch den Fahrer zum Überschreiten des Schwellenwerts und damit zu einem ungewollten Schaltvorgang, was für den Fahrer eine unliebsame Überraschung darstellt. Solche Schaltassistenzsysteme, die üblicherweise mit Druckmessdosen oder Dehnmessstreifen arbeiten, werden beispielsweise von Translogic Systems Ltd. angeboten. Diese Schilderung macht deutlich, dass sich der Fahrer wiederum an das Auslöseverhalten des Schaltassistenzsystems anpassen muss.

Ausgehend hiervon liegt der vorliegenden Erfindung die Aufgabe zu Grunde, ein Motorrad mit einer Schalteinrichtung zum Schalten ohne Kupplungsbetätigung zu schaffen, die es dem Fahrer ermöglicht, das Motorrad zu benutzen, ohne dass er sich auf ein geändertes Schaltverhalten einstellen muss.

Die Erfindung weist zur Lösung dieser Aufgabe die im Anspruch 1 angegebenen Merkmale auf. Vorteilhafte Ausgestaltungen hiervon sind in den weiteren Ansprüchen beschrieben.

Die Erfindung schafft ein Motorrad mit einer Schalteinrichtung, welche das Schaltgetriebe des einen Antriebsmotor aufweisenden Motorrads zur Durchführung eines Gangwechsels bei geschlossener Kupplung zwischen Antriebsmotor und Schaltgetriebe betätigt, wobei das Schaltgetriebe eine drehbetätigbare Schaltwelle und eine drehbetätigbare Schaltwalze aufweist, wobei die Schalteinrichtung einen zur Drehbetätigung der Schaltwelle vorgesehenen Schalthebel aufweist und zur Beeinflussung des Abtriebsmoments des Antriebsmotors ausgebildet ist, wobei die Schalteinrichtung eine die Drehbetätigung der Schaltwelle erfassende erste Sensoreinrichtung aufweist, und die erste Sensoreinrichtung zur direkten Erfassung des sich durch die Drehbetätigung des Schalthebels einstellenden Drehwinkels der Schaltwelle und Bereitstellung eines ersten Sensorsignals ausgebildet ist und die Schalteinrichtung zur Beeinflussung des Abtriebsmoments des Antriebsmotors in Abhängigkeit des ersten Sensorsignals der ersten Sensoreinrichtung ausgebildet ist, und die Schaltwelle im Bereich eines stirnseitigen Endabschnitts mit einem als zylinderförmiger Körper ausgebildeten Stützlager versehen ist, welches an der Schaltwelle lösbar festlegbar ist und eine Aufnahme zur lösbaren Festlegung einer Magneteinrichtung aufweist und die Schalteinrichtung eine die Drehbetätigung der Schaltwalze erfassende zweite Sensoreinrichtung aufweist und die Schalteinrichtung zur Beeinflussung des Abtriebsmoments des Antriebsmotors in Abhängigkeit eines Sensorsignals der zweiten Sensoreinrichtung ausgebildet ist und die Schaltwalze im Bereich eines stirnseitigen Endabschnitts eine Ausnehmung aufweist, in der eine Magneteinrichtung angeordnet ist.

Im Gegensatz zu den bekannten Schaltassistenten, welche die Betätigungskraft, mit der der Fahrer des Motorrads den Schalthebel betätigt, als Referenz für die Erkennung eines fahrerseitigen Gangwechselwunsches mit einer Sensoreinrichtung erfassen oder den Betätigungsweg des Schalthebels für die Erkennung des Gangwechselwunsches mit einer Sensoreinrichtung erfassen, ist es nach der vorliegenden Erfindung vorgesehen, eine erste Sensoreinrichtung zur Erfassung der Drehbetätigung der Schaltwelle vorzusehen und die Schalteinrichtung so weiterzubilden, dass sie das Motormoment auf der Basis des Sensorsignals der ersten Sensoreinrichtung, also des Schaltwellenwinkelsensors beeinflusst.

Damit fällt der Bedarf der Erfassung und Überwachung einer Kraftschwelle weg, die dann überschritten wird, wenn der Fahrer den Schalthebel mit Nachdruck betätigt hat. Der Wert dieser Kraftschwelle kann höher sein als der Wert der Kraft, die der Fahrer für die Getriebebetätigung gewohnheitsmäßig ausübt, was für den Fahrer zu einer ungewohnten Umstellung auf eine kraftschwellenkonforme Betätigung des Schalthebelbetätigung führt. Dieser Nachteil wird durch die Ausbildung der Schalteinrichtung vermieden.

Auch wird der Nachteil einer indifferenten, schwammigen Betätigung des Schalthebels vermieden, da eine zu einer solchen Betätigung führende Feder im Kraftübertragungsweg zwischen Schalthebel und Getriebeeingang weggefallen ist, da auch kein Bedarf mehr besteht an der Erfassung der Betätigungskraft, mit der der Fahrer den Schalthebel betätigt. Dies wird dadurch erreicht, dass der Gangwechselwunsch des Fahrers direkt durch die Erfassung des Drehwinkels der Schaltwelle mit der ersten Sensoreinrichtung erfasst werden kann und nicht mehr über die Erfassung einer vorgelagerten Messgröße, wie der Federkraft oder der Erfassung der Betätigungskraft des Schalthebels über eine Druckmessdose. Damit kann ein Gangwechselwunsch des Fahrers auch dann erkannt werden, wenn die zum Gangwechsel führende Betätigungskraft nicht über einen zwar vorhandenen, aber in manchen Situationen nicht betätigten Schalthebel zur Betätigung durch den Fuß des Fahrers auf die Schaltwelle aufgebracht wird, sondern durch eine andere am Motorrad vorgesehene Einrichtung, die beispielsweise manuell betätigt wird, ähnlich einer Einrichtung zur optionalen manuellen Betätigung der Hinterradbremse des Motorrads, was nur einer der Vorteile der Schalteinrichtung ist.

Es ist nach der Erfindung vorgesehen, dass die Schalteinrichtung eine die Drehbetätigung der Schaltwalze erfassende zweite Sensoreinrichtung aufweist und die Schalteinrichtung zur Beeinflussung des Abtriebsmoments des Antriebsmotors in Abhängigkeit eines Sensorsignals der zweiten Sensoreinrichtung ausgebildet ist.

Mit der zweiten Sensoreinrichtung steht ein von dieser ausgegebenes zweites Sensorsignal zur Verfügung, welches funktional mit dem von der ersten Sensoreinrichtung bereitgestellten ersten Sensorsignal gekoppelt werden kann derart, dass das vom Motor abgegebene Motormoment mittels der Schalteinrichtung beeinflusst werden kann. Diese Beeinflussung kann beispielsweise dazu eingesetzt werden, dass die Schalteinrichtung das Motormoment zur Durchführung des Gangwechselvorgangs verringert, was auf der Basis des von der ersten Sensoreinrichtung bereitgestellten ersten Sensorsignals erfolgen kann und die Schalteinrichtung das Motormoment dann auf Basis des von der zweiten Sensoreinrichtung bereitgestellten zweiten Sensorsignals wieder erhöht, wobei zu diesem Zweck über die zweite Sensoreinrichtung die Drehwinkellage der Schaltwalze erfasst wird und anhand der Drehwinkellage erkannt wird, dass der Gangwechselvorgang abgeschlossen ist und das Motormoment wieder angehoben werden kann.

Es ist nach einer Weiterbildung der Erfindung auch vorgesehen, dass der Schalthebel zur Schaltkraftübertragung auf die Schaltwelle mit der Schaltwelle formschlüssig gekoppelt ist oder unter Zwischenschaltung einer Kraftübertragungseinrichtung mit der Schaltwelle verbunden ist. Auf diese Weise wird beiden Konfigurationsmöglichkeiten Rechnung getragen, nämlich dass der Schalthebel an einem stirnseitigen Ende der Schaltwelle festgelegt ist oder beispielsweise mit einer Schalthebelumlenkung mit dem stirnseitigen Ende der Schaltwelle kraftschlüssig gekoppelt ist.

Es bedeutet dies mit anderen Worten, dass in beiden Fällen der Koppelung des Schalthebels mit der Schaltwelle, also im Falle der direkten formschlüssigen Anbringung des Schalthebels an der Schaltwelle und im Falle der kraftschlüssigen Verbindung des Schalthebels mit der Schaltwelle über eine Schalthebelumlenkung auf eine im Schaltkraftübertragungsweg angeordnete Federeinrichtung, die bei den bekannten Schaltassistenten vorhanden ist, verzichtet werden kann. Damit zeichnet sich die Schalteinrichtung durch den Vorteil aus, dass ein durch die Federeinrichtung im Schaltkraftübertragungsweg erzeugtes indifferentes und schwammiges Schaltgefühl vermieden werden kann und insbesondere die Leerlauffindung nicht durch eine solche Federeinrichtung verschlechtert wird.

Es ist nach der Erfindung auch vorgesehen, dass die Schaltwelle an einem stirnseitigen Endabschnitt mit einem als zylinderförmiger Körper ausgebildeten Stützlager versehen ist, welcher an der Schaltwelle lösbar festlegbar ist und eine Aufnahme zur lösbaren Festlegung einer Magneteinrichtung aufweist. Mit diesem, beispielsweise aus einem Kunststoffwerkstoff geformten Körper wird also eine Funktionsintegration erreicht, nämlich dahingehend, dass der Körper gleichzeitig als Axiallager für die Lagerung der Schaltwelle im Motorgehäuse oder Getriebegehäuse dient und eine Aufnahme aufweist für die Anordnung eines Permanentmagneten in der Aufnahme, der mit der ersten, beispielsweise außerhalb des Motorgehäuses oder Getriebegehäuses angeordneten Sensoreinrichtung zusammenarbeitet.

Auch ist es nach der Erfindung vorgesehen, dass die Schaltwalze im Bereich eines stirnseitigen Endabschnitts in der Ausnehmung aufweist, in die eine Magneteinrichtung angeordnet ist. Bei der Magneteinrichtung kann es sich um einen Permanentmagneten handeln, dessen Drehwinkellage mittels der außerhalb des Motorgehäuses oder des Getriebegehäuses angeordneten zweiten Sensoreinrichtung zur Bereitstellung des zweiten Sensorsignals erfasst wird.

Die erste und/oder zweite Sensoreinrichtung können als berührungslos arbeitende Hallsensoren ausgebildet sein, welche mit der an der Schaltwelle angeordneten Magneteinrichtung beziehungsweise der an der Schaltwalze angeordneten Magneteinrichtung zusammenarbeiten, um die jeweilige Drehwinkellage der Schaltwelle und der Schaltwalze zu erfassen und auf diese Weise das erste und zweite Sensorsignal bereitstellen.

Schließlich ist es nach einer Weiterbildung der Erfindung auch vorgesehen, dass die Schalteinrichtung zum Gangwechsel des Schaltgetriebes bei geschlossener Kupplung und eingelegter Gangstufe in beide Schaltrichtung ausgebildet ist. Es bedeutet dies mit anderen Worten, dass mittels der Schalteinrichtung sowohl das Heraufschalten in einen höheren Gang als auch das Herunterschalten in einen niedrigeren Gang bei geschlossener Kupplung möglich ist, ohne dass also der Fahrer des Motorrads die Kupplung betätigen muss.

Die Erfindung wird im folgenden anhand der Zeichnung näher erläutert. Diese zeigt in:
Fig. 1 eine Seitenansicht auf einen Motorradrahmen mit Zweizylindermotor in V-Anordnung und einem an der Schaltwelle direkt angeordneten Schalthebel und dahinter ersichtlichem Schaltwalzensensor;
Fig. 2 eine Seitenansicht auf den Motorradrahmen von der anderen Seite;
Fig. 3 eine Schnittansicht, wobei die Schnittebene III-III in Fig. 2 der Zeichnung ersichtlich ist und sich durch einen Teil des Antriebsmotors erstreckt und die Schnittansicht einen Blick auf die Schnittebene von unten zeigt; und
Fig. 4 eine Schnittansicht gemäß der Schnittebene IV-IV nach Fig. 2.

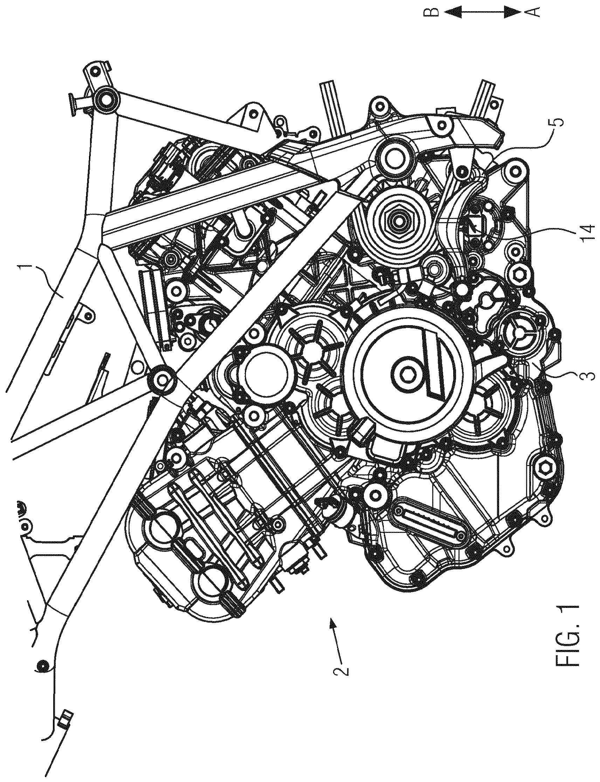

Fig. 1 der Zeichnung zeigt eine Seitenansicht auf eine Darstellung mit einem Motorradrahmen 1 und einem Antriebsmotor 2 in der Form eines V-Motors.

Weitere Einzelheiten des Motorrads, wie beispielsweise ein Vorderrad und ein Hinterrad und einen Motorradsattel und dergleichen sind aus Gründen der Vereinfachung der Darstellung weggelassen worden, da derartige Bauteile an einem Motorrad als üblicherweise vorhanden vorausgesetzt werden.

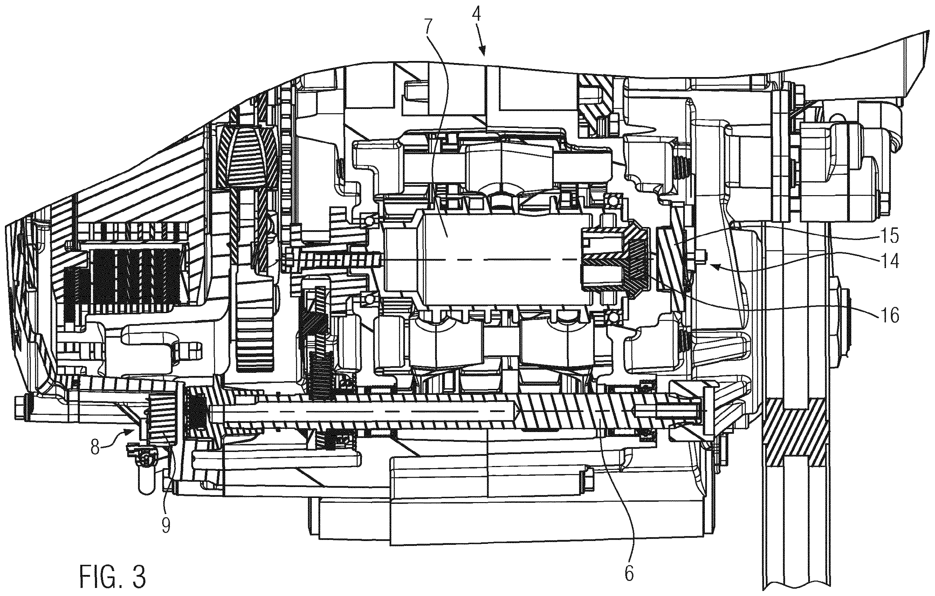

Der Antriebsmotor 2 weist ein in dem Motorgehäuse 3 angeordnetes Schaltgetriebe 4 auf, von dem einige Bauteile in Fig. 3 der Zeichnung ersichtlich sind.

Darüber hinaus weist das nicht näher dargestellte Motorrad einen Schalthebel 5 auf, der zur Betätigung des Schaltgetriebes 4 durch den Fahrer des Motorrads vorgesehen ist. Zu diesem Zweck kann der Fahrer den Schalthebel 5 mit seinem, bei der dargestellten Ausführungsform, linken Fuß betätigen und zwar derart, dass der Fahrer zum Herunterschalten den Schalthebel 5 in Richtung des Pfeils A nach Fig. 1 der Zeichnung betätigt und zum Hochschalten in Richtung des Pfeils B nach Fig. 1.

Eine solche Betätigung des Schalthebels 5 sorgt dafür, dass die in Fig. 3 der Zeichnung ersichtliche Schaltwelle 6 um einen vorbestimmten Drehwinkel oder Schwenkwinkel drehbetätigt wird, was letztlich dazu führt, dass die vor der Drehbetätigung der Schaltwelle 6 durch den Fahrer im Eingriff befindliche Gangstufe gewechselt wird und zwar je nach Richtung der Betätigung des Schalthebels 5 in Richtung einer höheren Gangstufe oder in Richtung einer niedrigeren Gangstufe.

Im einzelnen führt die Drehbetätigung des Schalthebels 5 zu einer Drehbetätigung der in Fig. 3 der Zeichnung dargestellten Schaltwalze 7, an deren Außenumfang nicht näher dargestellte Kulissenführungen ausgebildet sind, die sich mit ebenfalls nicht näher dargestellten Schaltgabeln in Eingriff befinden, so dass über eine Drehbetätigung der Schaltwalze 7 um einen vorbestimmten Drehwinkel oder Schwenkwinkel Schaltgabeln axial verschoben werden, welche axial verlagerbare, aber auf Getriebewellen drehfest gelagerte Zahnräder axial verschieben können, die an ihren Seitenflanken Schaltklauen aufweisen und so durch den Eingriff der Schaltklauen den Kraftfluss herstellen oder durch das Lösen des Eingriffs den Kraftfluss unterbrechen können.

Die Verschwenkbewegung beziehungsweise Betätigung des Schalthebels 5 durch den Fahrer des Motorrads führt also in jedem Fall zu einer Drehbetätigung der Schaltwelle 6 um einen bestimmten Drehwinkel oder Schwenkwinkel und zu einer Drehbetätigung der Schaltwalze 7 um einen bestimmten Drehwinkel oder Schwenkwinkel. Auch bei der kraftschlüssigen Kopplung der Schaltwelle mit einem Schalthebel über ein nicht näher dargestelltes Hebelgetriebe oder eine Umlenkung führt die Betätigung des Schalthebels durch den Fahrer zu einer Drehbetätigung der Schaltwelle und der Schaltwalze.

Möchte der Fahrer des Motorrads also einen Gangwechselvorgang durchführen, so betätigt er sowohl zum Herunterschalten als auch zum Hochschalten den Schalthebel 5 und auch die Schaltwalze 7.

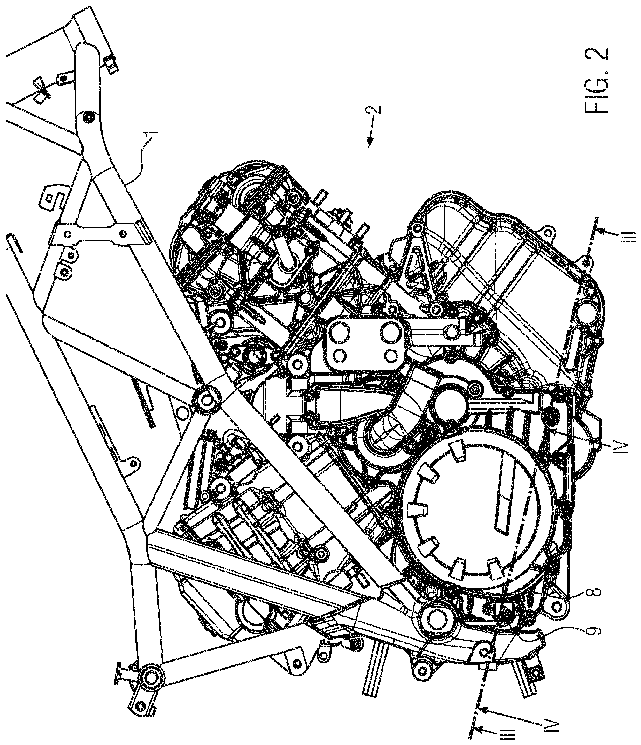

Die Schalteinrichtung zur Betätigung des Schaltgetriebes 4 besitzt eine in Fig. 3 der Zeichnung mit dem Bezugszeichen 8 bezeichnete erste Sensoreinrichtung, welche am Motorgehäuse 3 außen angeordnet ist - wie dies anhand von Fig. 2 der Zeichnung ebenfalls ersichtlich ist - und bei der es sich bei der dargestellten Ausführungsform um einen Hallsensor 9 handelt.

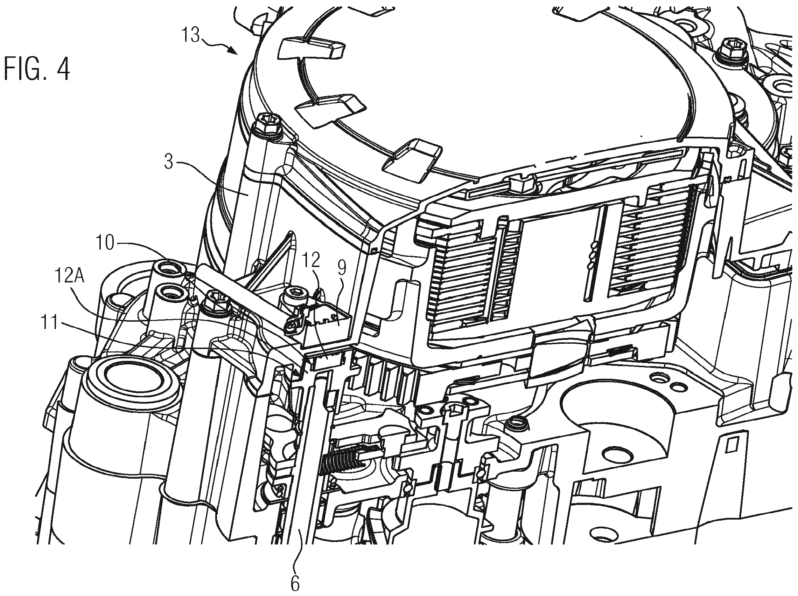

Die Anordnung des Hallsensors 9 ergibt sich näher noch anhand von Fig. 4 der Zeichnung, welche den Hallsensor 9 am Motorgehäuse 3 außen so angeordnet zeigt, dass der Sensor 9 einer Aufnahme 10 gegenüberliegend angeordnet ist, die an einem aus einem Kunststoffwerkstoff gefertigten zylinderförmigen Körper 11 ausgebildet ist, der gleichzeitig als Stützlager 12A für die axiale und radiale Führung der Schaltwelle 6 ausgebildet ist.

In der Aufnahme 10 ist eine Magneteinrichtung in der Form eines Permanentmagneten 12 angeordnet, so dass der Drehwinkel oder der Verschwenkwinkel der Schaltwelle 6, die sich aufgrund einer Drehbetätigung des Schalthebels 5 durch den Fahrer einstellt, vom Hallsensor 9 erfasst werden kann und als erstes Sensorsignal zur Verfügung steht.

Leitet also der Fahrer des Motorrads durch eine entsprechende Betätigung des Schalthebels 5 einen Gangwechselvorgang ein, so wird die Veränderung der Drehlage der Schaltwelle 6 durch die erste Sensoreinrichtung 8 erfasst, welche ein Sensorsignal zur Verfügung stellt, welches von einer nicht näher dargestellten elektronischen Steuereinrichtung oder Regeleinrichtung der Schalteinrichtung erfasst wird und die daraufhin den Antriebsmotor 2 so ansteuert, dass das von diesem abgegebene Motormoment verringert wird und dann ein Gangwechselvorgang durchgeführt werden kann, ohne dass die in Fig. 4 der Zeichnung ersichtliche Kupplung 13 des Antriebsmotors 2 durch den Fahrer betätigt werden muss.

Die vom Fahrer durch die Betätigung des Schalthebels 5 in der für ihn bekannten Weise aufgebrachte Hebelbetätigungskraft stellt gleichzeitig die Schaltkraft für den Gangwechselvorgang zur Verfügung, ohne dass er sich auf die Schalteinrichtung besonders einstellen muss, also sein Schaltverhalten ändern muss.

Die Betätigung des Schalthebels 5 durch den Fahrer führt auch dazu, dass aufgrund der von ihm ausgeübten Schaltkraft die Schaltwalze 7 um einen bestimmten Drehwinkel oder Verschwenkwinkel verschwenkt oder drehbetätigt wird.

Diese Drehbetätigung der Schaltwalze 7 wird von einer in Fig. 1 der Zeichnung ersichtlichen und in Fig. 3 der Zeichnung näher dargestellten zweiten Sensoreinrichtung 14 in der Form eines Hallsensor 15 erfasst, der die Drehwinkelveränderung der Schaltwalze 7 feststellen kann und zwar über das Zusammenwirken des Hallsensors 15 mit einem an einem stirnseitigen Ende der Schaltwalze 7 angeordneten Permanentmagneten 16.

Die Drehbetätigung der Schaltwalze 7 führt also zu einer Veränderung des vom Permanentmagneten 16 aufgebauten Magnetfelds, was von dem Hallsensor 15 erfasst wird und dieser auf diese Weise ein zweites Sensorsignal zur Verfügung stellt, welches ebenfalls wieder von der nicht näher dargestellten Steuereinrichtung oder Regeleinrichtung der Schalteinrichtung erfasst und ausgewertet werden kann. Dieses zweite Sensorsignal kann ebenfalls zu einer Beeinflussung des vom Antriebsmotor 2 abgegebenen Motormoments verwendet werden und zwar alleine oder zusätzlich zu dem ersten Sensorsignal, um die Reduzierung des Motormoments aufzuheben oder das Motormoment wieder anzuheben.

Die Schalteinrichtung zum Schalten des Schaltgetriebes ohne die Betätigung der Kupplung des Motorrads zeichnet sich also dadurch aus, dass im Gegensatz zu bekannten Schaltassistenten keine von der Schaltkraft des Fahrers veränderbare Federeinrichtung im Kraftübertragungsweg zwischen dem Schalthebel und der Schaltwelle vorhanden ist und sich der Fahrer des Motorrads daher auch nicht auf ein durch eine solche Feder geändertes Schaltverhalten einstellen muss. Auch muss nicht die vom Fahrer auf den Schalthebel aufgebrachte Betätigungskraft zum Schalten der Gänge des Getriebes erfasst und ausgewertet werden und demgemäß auch nicht eine Kraftmessdose oder dergleichen Krafterfassungseinrichtung zur Erfassung der Betätigungskraft am Motorrad angebracht werden.

Der Schaltwunsch des Fahrers kann über die Drehbetätigung der Schaltwelle mittels der mit der Schaltwelle zusammen arbeitenden ersten Sensoreinrichtung erfasst und erkannt werden und daraufhin das Motormoment des Antriebsmotors zur Durchführung des Gangwechselvorgangs verringert werden, wobei zur Erfassung des Schaltwunsches auch noch das zweite Sensorsignal der mit der Schaltwalze zusammen arbeitenden zweiten Sensoreinrichtung ausgewertet werden kann. Eines oder beide Sensorsignale können dann zur entsprechenden Ansteuerung des Antriebsmotors zur Verringerung des Antriebsmoments zur Durchführung des Gangwechselvorgangs oder zum Wiederaufbau des Antriebsmoments verwendet werden.

Die Schalteinrichtung besitzt gegenüber den bekannten Schaltassistenten auch den Vorteil, dass die Schalteinrichtung verschleißfrei verarbeitet, und eine für den Fahrer gewohnte geringe Kraft der Betätigung des Schalthebels ausreicht, um den Gangwechselvorgang ohne die Betätigung der Kupplung des Motorrads einzuleiten und durchzuführen, da mit der auf den Schalthebel wirkenden Betätigungskraft keine Federeinrichtung im Kraftübertragungsweg zwischen Schalthebel und Schaltwelle verspannt werden muss. Die Schalthebelbetätigung weist auch beim Einsatz der Schalteinrichtung die für den Fahrer des Motorrads bekannte Rückmeldung auf, der Fahrer muss sich also nicht auf ein geändertes Schaltverhalten einstellen, da keine Torsionseinrichtung oder Druckfeder im System vorhanden ist, die ein schwammiges und indifferentes Schaltgefühl hervorruft.

Durch das Fehlen einer solchen Federeinrichtung wird auch das Auffinden der Neutralstellung des Schaltgetriebes durch den Fahrer nicht behindert, wie dies bei bekannten Schaltassistenten der Fall ist und der Schaltwalzensensor kann auch dazu herangezogen werden, den vollzogenen Gangwechsel feststellen zu können, so dass das Schaltgetriebe des Motorrads geschont wird und das Motormoment erst dann wieder aufgebaut wird, wenn dies zu einem für das Schaltgetriebe unschädlichen Zeitpunkt möglich ist. Aufgrund des Wegfalls des Bedarfs der Anbringung einer mit dem Schalthebel funktional gekoppelten Kraftmessvorrichtung am Motorrad entfällt auch der Bedarf einer Verdrahtung der Kraftmessvorrichtung zur Stromversorgung und Signalübermittlung an eine Steuereinrichtung am Motorrad und der Aufbau des Motorrads mit Schaltassistenzsystem wird vereinfacht.

Hinsichtlich vorstehend im einzelnen nicht näher erläuterter Merkmale der Erfindung wird in übrigen ausdrücklich auf die Patentansprüche und die Zeichnung verwiesen.

### Bezugszeichenliste

- 1.: Motorradrahmen
- 2.: Antriebsmotor
- 3.: Motorgehäuse
- 4.: Schaltgetriebe
- 5.: Schalthebel
- 6.: Schaltwelle
- 7.: Schaltwalze
- 8.: erste Sensoreinrichtung
- 9.: Hallsensor
- 10.: Aufnahme
- 11.: Körper
- 12.: Permanentmagnet
- 12A.: Stützlager
- 13.: Kupplung
- 14.: zweite Sensoreinrichtung
- 15.: Hallsensor
- 16.: Permanentmagnet

## Patentansprüche

1. **Motorrad** mit einer Schalteinrichtung, welche das Schaltgetriebe (4) des einen Antriebsmotor (2) aufweisenden Motorrads zur Durchführung eines Gangwechsels bei geschlossener Kupplung (13) zwischen Antriebsmotor (2) und Schaltgetriebe (4) betätigt, wobei das Schaltgetriebe (4) eine drehbetätigbare Schaltwelle (6) und eine drehbetätigbare Schaltwalze (7) aufweist, wobei die Schalteinrichtung einen zur Drehbetätigung der Schaltwelle (6) vorgesehenen Schalthebel (5) aufweist und zur Beeinflussung des Abtriebsmoments des Antriebsmotors (2) ausgebildet ist, wobei die Schalteinrichtung eine die Drehbetätigung der Schaltwelle (6) erfassende erste Sensoreinrichtung (8) aufweist, **dadurch gekennzeichnet, dass** die erste Sensoreinrichtung (8) zur direkten Erfassung des sich durch die Drehbetätigung des Schalthebels (5) einstellenden Drehwinkels der Schaltwelle (6) und Bereitstellung eines ersten Sensorsignals ausgebildet ist und die Schalteinrichtung zur Beeinflussung des Abtriebsmoments des Antriebsmotors (2) in Abhängigkeit des ersten Sensorsignals der ersten Sensoreinrichtung (8) ausgebildet ist, und die Schaltwelle (6) im Bereich eines stirnseitigen Endabschnitts mit einem als zylinderförmiger Körper (11) ausgebildeten Stützlager versehen ist, welches an der Schaltwelle (6) lösbar festlegbar ist und eine Aufnahme (10) zur lösbaren Festlegung einer Magneteinrichtung (12) aufweist und die Schalteinrichtung eine die Drehbetätigung der Schaltwalze (7) erfassende zweite Sensoreinrichtung (14) aufweist und die Schalteinrichtung zur Beeinflussung des Abtriebsmoments des Antriebsmotors (2) in Abhängigkeit eines Sensorsignals der zweiten Sensoreinrichtung (14) ausgebildet ist und die Schaltwalze (7) im Bereich eines stirnseitigen Endabschnitts eine Ausnehmung aufweist, in der eine Magneteinrichtung (16) angeordnet ist.

2. Motorrad nach Anspruch 1, **dadurch gekennzeichnet, dass** der Schalthebel (5) zur Schaltkraftübertragung auf die Schaltwelle (6) mit der Schaltwelle (6) formschlüssig gekoppelt ist oder unter Zwischenschaltung einer Kraftübertragungseinrichtung mit der Schaltwelle (6) verbunden ist.

3. Motorrad nach Anspruch 1 oder 2, **dadurch gekennzeichnet, dass** der Antriebsmotor (2) ein Gehäuse (3) aufweist und die erste (8) und/oder die zweite (14) Sensoreinrichtung am Gehäuse (3) außen festgelegt ist.

4. Motorrad nach einem der vorstehenden Ansprüche, **dadurch gekennzeichnet, dass** die erste (8) und/oder zweite (14) Sensoreinrichtung als Hallsensor ausgebildet ist.

5. Motorrad nach einem der vorstehenden Ansprüche, **dadurch gekennzeichnet, dass** die Schalteinrichtung zum Gangwechsel des Schaltgetriebes (4) bei geschlossener Kupplung (13) und eingelegter Gangstufe in beide Schaltrichtungen ausgebildet ist.

## Claims

1. Motorcycle having a shifting device that actuates the manual transmission (4) of the motorcycle having a drive motor (2), for carrying out a gear shift when the coupling (13) between drive motor (2) and manual transmission (4) is closed, wherein the manual transmission (4) has a rotationally actuatable selector shaft (6) and a rotationally actuatable selector drum (7), wherein the shifting device has a gear-shift lever (5) provided for rotationally actuating the selector shaft (6) and is configured to influence the output torque of the drive motor (2), wherein the shifting device has a first sensor device (8) detecting the rotating actuation of the selector shaft (6), **characterised in that** the first sensor device (8) is configured to directly detect the rotational angle of the selector shaft (6) resulting from the rotating actuation of the gear-shift lever (5) and to provide a first sensor signal, and the shifting device is configured to influence the output torque of the drive motor (2) depending on the sensor signal of the first sensor device (8), and the selector shaft (6) is provided with a support bearing configured as a cylindrical body (11) in the region of a front-side end portion which is releasably fixable to the selector shaft (6) and has a receptacle (10) for the releasable attachment of a magnet device (12), and the shifting device has a second sensor device (14) detecting the rotary actuation of the selector drum (7) and the shifting device is configured to influence the output torque of the drive motor (2) depending on a sensor signal of the second sensor device (14), and the selector drum (7) has a recess in which a magnet device (16) is arranged in the region of the front-side end portion.

2. Motorcycle according to claim 1, **characterised in that** the gear-shift lever (5) is positively coupled with the selector shaft (6) to transmit the shifting force to the selector shaft (6) or is connected to the selector shaft (6) with the interposition of a force transmission device.

3. Motorcycle according to claim 1 or 2, **characterised in that** the drive motor (2) has a housing (3) and the first (8) and/or the second (14) sensor device is attached to the outside of the housing (3).

4. Motorcycle according to one of the preceding claims, **characterised in that** the first (8) and/or the second (14) sensor device is configured as a Hall sensor.

5. Motorcycle according to one of the preceding claims, **characterised in that** the shifting device is configured for a gear shift of the manual transmission (4) in both shifting directions when the coupling (13) is closed and the gear is engaged.

## Revendications

1. Motocycle pourvu d'un dispositif de changement de vitesse, lequel actionne la boite de vitesse (4) d'un motocycle présentant un moteur d'entraînement (2) pour effectuer un changement de vitesse lorsque l'embrayage (13) est fermé entre le moteur d'entraînement (2) et la boite de vitesse (4), dans lequel la boite de vitesse (4) présente un arbre de changement de vitesse (6) actionnable en rotation et un rouleau de changement de vitesse (7) actionnable en rotation, dans lequel le dispositif de changement de vitesse présente un levier de changement de vitesse (5) prévu pour l'actionnement en rotation de l'arbre de changement de vitesse (6) et conçu pour agir sur le couple de sortie du moteur d'entraînement (2), dans lequel le dispositif de changement de vitesse présente un premier dispositif capteur (8) détectant l'actionnement en rotation de l'arbre de changement de vitesse (6), **caractérisé en ce que** le premier dispositif capteur (8) est conçu pour la détection directe de l'angle de rotation de l'arbre de changement de vitesse (6) réglé par l'actionnement en rotation du levier de changement de vitesse (5) et pour la production d'un premier signal de capteur et le dispositif de changement de vitesse est conçu pour agir sur le couple de sortie du moteur d'entraînement (2) en fonction du premier signal de capteur du premier dispositif capteur (8), et l'arbre de changement de vitesse (6) est muni dans la zone d'un segment d'extrémité du côté frontal d'un palier de support conçu sous forme d'un corps en forme de cylindre (11), lequel peut être fixé en étant amovible sur l'arbre de changement de vitesse (6) et présente un réceptacle (10) permettant le logement amovible d'un dispositif magnétique (12) et le dispositif de changement de vitesse présente un deuxième dispositif capteur (14) détectant l'actionnement en rotation du rouleau de changement de vitesse (7) et le dispositif de changement de vitesse est conçu pour agir sur le couple de sortie du moteur d'entraînement (2) en fonction d'un signal de capteur du deuxième dispositif capteur (14) et le rouleau de changement de vitesse (7) présente une cavité dans la zone d'un segment d'extrémité du côté frontal, dans laquelle est placée le dispositif magnétique (16).

2. Motocycle selon la revendication 1, **caractérisé en ce que** le levier de changement de vitesse (5) est couplé par complémentarité des formes avec l'arbre de changement de vitesse (6) pour la transmission de la force de changement de vitesse sur l'arbre de changement de vitesse (6) ou est relié avec l'arbre de changement de vitesse (6) moyennant un réglage de vitesse intermédiaire d'un dispositif de transmission de force.

3. Motocycle selon la revendication 1 ou la revendication 2, **caractérisé en ce que** le moteur d'entraînement (2) présente un carter (3) et le premier (8) et/ou le deuxième (14) dispositif capteur est fixé à l'extérieur sur le carter (3).

4. Motocycle selon l'une des revendications précédentes, **caractérisé en ce que** le premier (8) et/ou le deuxième (14) dispositif capteur est conçu comme un capteur à effet Hall.

5. Motocycle selon l'une des revendications précédentes, **caractérisé en ce que** le dispositif de changement de vitesse est conçu pour le changement de vitesse de la boite de vitesses (4) lorsque l'embrayage (13) est fermé pour changer les vitesses dans les deux sens de changement de vitesse lors d'un rapport engagé.
